# EUROPEAN PATENT SPECIFICATION

(11) **EP 3 613 869 B1**
(45) Date of publication and mention of the grant of the patent: **21.12.2022**
(21) Application number: 19190479.6
(22) Date of filing: 07.08.2019
(51) Int. Cl.: C23C 4/11, C23C 4/12, C23C 4/18, C23C 28/04, F01D 11/12

(54) **ABRADABLE COATING FOR COMPONENTS IN HIGH-TEMPERATURE MECHANICAL SYSTEMS**
ABREIBBARE BESCHICHTUNG FÜR KOMPONENTEN IN MECHANISCHEN HOCHTEMPERATURSYSTEMEN
REVÊTEMENT ABRADABLE POUR COMPOSANTS DANS DES SYSTÈMES MÉCANIQUES À HAUTE TEMPÉRATURE

(30) Priority: 21.08.2018 US 201816107177
(43) Date of publication of application: 26.02.2020
(73) Proprietor: Rolls-Royce Corporation, Indianapolis, Indiana 46225-1103 (US); Rolls-Royce North American Technologies, Inc., Indianapolis, IN 46241 (US)
(72) Inventor: BOLCAVAGE, Ann, Indianapolis, Indiana 46220 (US); SINATRA, Raymond J, Indianapolis, Indiana 46278 US (US); CYBULSKY, Michael, Indianapolis, Indiana 46256 (US); GOLD, Matthew R, Carmel, Indiana 46033 (US); HUGHES, Melissa, Indianapolis, Indiana 46205 (US)
(74) Representative: HGF

(56) References cited:
- EP-A1- 2 194 164
- EP-A2- 1 621 646
- WO-A1-2012/122373

## Description

### TECHNICAL FIELD

The present disclosure relates to gas turbine engines comprising coating systems that include an abradable ceramic layer, and also to methods for making such gas turbine engines.

### BACKGROUND

Components of high-temperature mechanical systems, such as, for example, gas turbine engines, operate in severe environments. For example, the high-pressure turbine blades and vanes exposed to hot gases in commercial aeronautical engines typically experience exterior surface temperatures of about 1000° C, with short-term peaks as high as 1100° C. Example components of high-temperature mechanical systems may include a Nibased or Co-based super alloy substrate or a ceramic or ceramic matrix composite substrate.

Economic and environmental concerns, e.g., the desire for improved efficiency and reduced emissions, continue to drive the development of advanced gas turbine engines with higher inlet temperatures. Additionally, reducing over-tip leakage between a tip of a gas turbine engine blade and the surrounding blade track, or seal segment, can improve efficiency of a gas turbine engine. Many techniques have been used to reduce over-tip leakage, including labyrinth sealing and active tip clearance control. Static seal segments also may be used to seal between the blade track and rotating gas turbine engine blades using passive tip clearance control.

EP2194164 discloses a multilayer thermal barrier coating (TBC) including a plurality of layers selected to provide properties to the multilayer TBC. For example, a multilayer TBC may include a first layer deposited over a substrate, a second layer deposited over the first layer and a third layer deposited over the second layer. The first layer may be selected to provide thermal cycling resistance, the second layer may be selected to provide low thermal conductivity and the third layer may be selected to provide at least one of erosion resistance and CMAS degradation resistance. The multilayer TBC may also include two layers, or more than three layers.

EP1621646 discloses a reduced thermal conductivity thermal barrier coating having improved impact resistance for an underlying substrate of articles that operate at, or are exposed to, high temperatures. The coating comprises an inner high fracture toughness layer nearest to the underlying substrate and having a thickness up to 127 microns sufficient to impart impact resistance to the thermal barrier coating, and comprises a zirconia-containing ceramic composition having a c/a ratio of the zirconia lattice in the range of from about 1.011 to about 1.016 and stabilized in the tetragonal phase by a stabilizing amount of a stabilizing metal oxide selected from the group consisting of yttria, calcia, ceria, scandia, magnesia, india, lanthana, gadolinia, neodymia, samaria, dysprosia, erbia, ytterbia, europia, praseodymia, and mixtures thereof. The thermal barrier coating further includes an outer thermal insulating layer adjacent to and overlaying the inner layer and comprising a ceramic thermal barrier coating material.

WO2012/122373 discloses a system including a blade track or blade shroud and a gas turbine blade that includes a blade tip. The blade track or blade shroud may include a substrate and an abradable layer formed over the substrate. The abradable layer may include at least one of zirconia or hafnia; ytterbia; samaria; and at least one of lutetia, scandia, ceria, gadolinia, neodymia, or europia. The abradable layer may include a porosity between about 25 vol. % and about 50 vol. %. The blade track or blade shroud and the gas turbine blade may be configured so the blade tip contacts a portion of the abradable layer during rotation of the gas turbine blade, and the abradable layer may be configured to be abraded by the contact by the blade tip.

### SUMMARY

It is provided a gas turbine engine as defined in claim 1 of the appended claims.

The application describes a gas turbine engine that includes an abradable runner, and the rotating component may be a gas turbine blade including a blade tip. The abradable runner includes a substrate including a metal or alloy; a bond coat directly on the substrate, wherein the bond coat includes an alloy including aluminum; an intermediate ceramic layer on the bond coat; and an abradable ceramic layer directly on the intermediate ceramic layer. The substrate is a part of a blade track. The intermediate ceramic layer includes a stabilized tetragonal prime phase constitution and defines a first porosity. The intermediate layer includes between about 4 wt. % and about 20 wt. % yttria and a balance zirconia or hafnia; or a first mixture including between about 5 wt. % and about 10 wt. % ytterbia, between about 0.5 wt. % and about 2.5 wt. % samaria, and between about 1 wt. % and about 4 wt. % of at least one of lutetia, scandia, ceria, neodymia, europia, or gadolinia, and a balance zirconia or hafnia. The abradable ceramic layer includes zirconia or hafnia stabilized in the tetragonal prime phase by a second mixture including between about 5 wt. % and about 10 wt. % ytterbia, between about 0.5 wt. % and about 2.5 wt. % samaria, and between about 1 wt. % and about 4 wt. % of at least one of lutetia, scandia, ceria, neodymia, europia, or gadolinia, and a balance zirconia or hafnia. The abradable ceramic layer defines a second porosity, and the second porosity is higher than the first porosity. The part of the blade track and the gas turbine blade are configured so the blade tip contacts a portion of the abradable ceramic layer during rotation of the gas turbine blade, and the abradable ceramic layer is configured to be abraded by the contact by the blade tip.

There is also is provided a method for making the gas turbine engine of the first aspect, as defined in claim 11 of the appended claims. The method includes forming a bond coat directly on a substrate. The bond coat includes an alloy including aluminum, and the substrate coating includes a metal or alloy. The method also includes thermally spraying an intermediate ceramic layer on the bond coat. The intermediate ceramic layer includes a stabilized tetragonal prime phase constitution and includes between about 4 wt. % and about 20 wt. % yttria and a balance zirconia or hafnia; or a first mixture including between about 5 wt. % and about 10 wt. % ytterbia, between about 0.5 wt. % and about 2.5 wt. % samaria, and between about 1 wt. % and about 4 wt. % of at least one of lutetia, scandia, ceria, neodymia, europia, or gadolinia, and a balance zirconia or hafnia. The method also includes thermally spraying an abradable ceramic layer directly on the intermediate ceramic layer. The abradable ceramic layer includes zirconia or hafnia stabilized in the tetragonal prime phase by a second mixture including between about 5 wt. % and about 10 wt. % ytterbia, between about 0.5 wt. % and about 2.5 wt. % samaria, between about 1 wt. % and about 4 wt. % of at least one of lutetia, scandia, ceria, neodymia, europia, or gadolinia, between about 2 wt. % and about 10 wt. % fugitive material, and a balance zirconia or hafnia.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1 is a conceptual diagram illustrating an example article that includes an intermediate ceramic layer and an abradable ceramic layer, each including a stabilized tetragonal prime phase constitution.
FIG. 2 is a conceptual diagram illustrating another example article that includes an intermediate ceramic layer and an abradable ceramic layer, each including a stabilized tetragonal prime phase constitution.
FIG. 3 is a is a conceptual diagram illustrating a system that includes an article that includes an intermediate ceramic layer and an abradable ceramic layer, each including a stabilized tetragonal prime phase constitution, and a gas turbine engine blade.
FIG. 4 is a flow diagram illustrating an example technique for forming an example article that includes an intermediate ceramic layer and an abradable ceramic layer, each including a stabilized tetragonal prime phase constitution.
FIG. 5 is a photomicrograph of an applied coating system including an intermediate ceramic layer and an abradable ceramic layer, in accordance with some examples of the disclosure.
FIG. 6 is a metallographic cross section of a first sample including an intermediate ceramic layer and an abradable ceramic layer, in accordance with some examples of the disclosure, after exposure to a temperature of 1371 °C for 100 hours.
FIG. 7 is a metallographic cross section of a second sample including an intermediate ceramic layer and an abradable ceramic layer, in accordance with some examples of the disclosure, after exposure to a temperature of 1427°C for 100 hours.
FIG. 8 is plot of calculated thermal conductivity versus temperature for two sample coatings.

### DETAILED DESCRIPTION

The disclosure describes articles that include a coating system including an intermediate ceramic layer and an abradable ceramic layer that each include a stabilized tetragonal prime phase constitution. At least the abradable ceramic layer includes between about 5 weight percent (wt. %) and about 10 wt. % ytterbia, between about 0.5 wt. % and about 2.5 wt. % samaria, and between about 1 wt. % and about 4 wt. % of at least one of lutetia, scandia, ceria, neodymia, europia, or gadolinia, and a balance zirconia or hafnia. The abradable ceramic layer may have a sintering temperature greater than about 1375 °C (about 2507 °F), which may allow the coating system to be used to higher operating temperatures while maintaining the as-deposited thermal and mechanical properties. This may allow use of less cooling air, resulting in higher gas turbine engine operating efficiency and lower specific fuel consumption (SFC). The stabilized tetragonal prime phase constitution also may result in increased durability, erosion resistance, thermal shock resistance, or combinations thereof.

Further, by using the abradable ceramic layer, the gas turbine engine may omit labyrinth sealing (including shrouded gas turbine engine blades), active tip clearance control, and other more complicated and/or heavy configurations, while still reducing fluid flow around the tip of the gas turbine blade.

In some examples, the intermediate ceramic layer may include a similar or substantially the same composition as the abradable ceramic layer. By including a similar or substantially the same composition, the intermediate ceramic layer and the abradable ceramic layer may have similar coefficients of thermal expansion, which may reduce stress at the interface between the intermediate ceramic layer and the abradable ceramic layer.

The abradable ceramic layer defines a higher porosity and/or larger average pore size than the intermediate ceramic layer. This may enable the intermediate ceramic layer to contribute environmental resistance to the coating system, while enabling the abradable ceramic layer to be abraded in response to contact with a gas turbine engine blade tip. The intermediate ceramic layer and the abradable ceramic layer may be applied using thermal spraying.

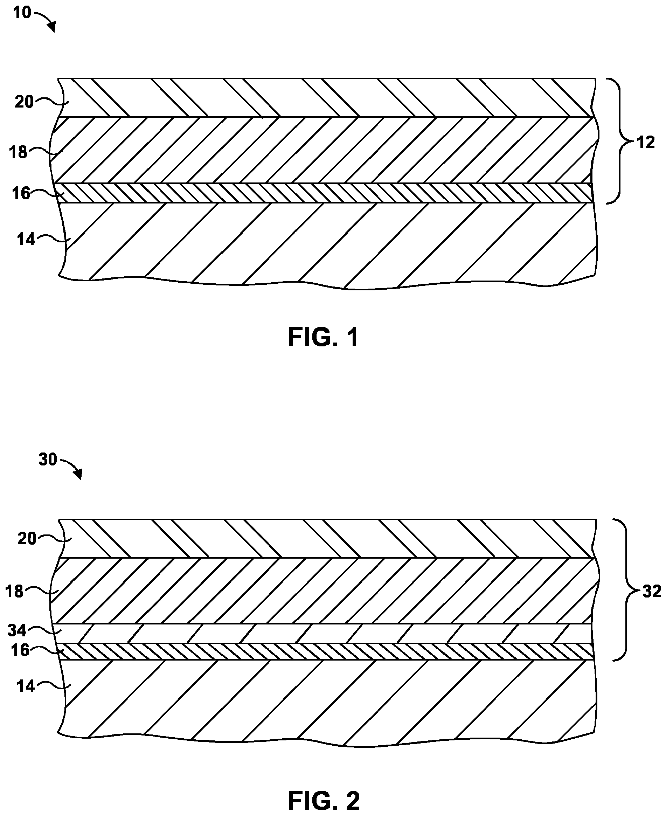

FIG. 1 is a conceptual diagram illustrating an example article 10 that includes a coating system 12 on a substrate 14. Coating system 12 includes a bond coat 16, an intermediate ceramic layer 18 on bond coat 16, and an abradable ceramic layer 20 directly on intermediate ceramic layer 18. Article 10 is part of a gas turbine engine, for example part of a blade track. For example, article 10 may be an abradable runner that is part of a blade track. The abradable runner is disposed adjacent to a rotating component of a gas turbine engine, such as, for example, a gas turbine engine blade, a knife seal, or the like.

Substrate 14 includes a metal or alloy, such as, for example, a superalloy. Superalloys include alloys based on Ni, Co, Ni/Fe, and the like. Superalloys may include other additive elements to alter their mechanical properties, such as toughness, hardness, temperature stability, corrosion resistance, oxidation resistance, and the like, as is well known in the art. For example, a superalloy may include one or more additives or alloying elements such as titanium (Ti), cobalt (Co), aluminum (Al), a rare earth element, or the like. Substrate 14 may include any useful superalloy including, for example, those available from Martin-Marietta Corp., Bethesda, MD, under the trade designation MAR-M247; those available from Cannon-Muskegon Corp., Muskegon, MI, under the trade designations CMSX-4 and CMSX-10; and the like.

Bond coat 16 is on substrate 14. Bond coat 16 includes an aluminum-containing alloy, such as a MCrAlY alloy (where M is Ni, Co, Fe, or NiCo), a β-NiAl nickel aluminide alloy (either unmodified or modified by Pt, Cr, Hf, Zr, Y, Si, or combinations thereof), a γ-Ni + γ'-Nᵢ₃Al nickel aluminide alloy (either unmodified or modified by Pt, Cr, Hf, Zr, Y, Si, or combinations thereof), or the like. In some examples, bond coat 16 may include Pt-modified aluminum-containing alloy.

As used herein, "formed on" and "on" mean a layer or coating that is formed on top of another layer or coating and encompass both a first layer or coating formed immediately adjacent a second layer or coating and a first layer or coating formed on top of a second layer or coating with one or more intermediate layers or coatings present between the first and second layers or coatings. In contrast, "formed directly on" and "directly on" denote a layer or coating that is formed immediately adjacent another layer or coating, i.e., there are no intermediate layers or coatings.

Bond coat 16 may define a thickness between about 76.2 micrometers (about 0.003 inches) and 508 micrometers (0.020 inches), such as between about 127 micrometers (about 0.005 inches) and about 203.2 micrometers (about 0.008 inches). Bond coat 16 provides an aluminum source for formation of an alumina scale on bond coat 16 by oxidation of bond coat 16.

Intermediate ceramic layer 18 is on bond coat 16. Intermediate ceramic layer 18 includes zirconia or hafnia stabilized in a tetragonal prime phase constitution. Intermediate ceramic layer 18 includes zirconia or hafnia and at least one rare earth oxide.

In some examples, intermediate ceramic layer 18 includes zirconia or hafnia stabilized in the tetragonal prime phase constitution by yttria. For example, intermediate ceramic layer 18 may include between about 4 wt. % and about 20 wt. % yttria. In some examples, intermediate ceramic layer 18 may include between about 4 wt. % and about 20 wt. % yttria and a balance zirconia or hafnia. In some examples, intermediate ceramic layer 18 may consist essentially of between about 4 wt. % and about 20 wt. % yttria and a balance zirconia or hafnia. As used herein, to "consist essentially of' means to consist of the listed element(s) or compound(s), while allowing the inclusion of impurities present in small amounts such that the impurities do not substantially affect the properties of the listed element or compound. For example, the purification of many rare earth elements may be difficult, and thus the nominal rare earth element may include small amounts of other rare earth elements. This mixture is intended to be covered by the language "consists essentially of." In some examples, intermediate ceramic layer 18 may consist essentially of yttria-stabilized zirconia or yttria-stabilized hafnia, which includes about 92 weight percent (wt. %) to about 94 wt. % zirconia or hafnia stabilized by about 6 wt. % to about 8 wt. % yttria.

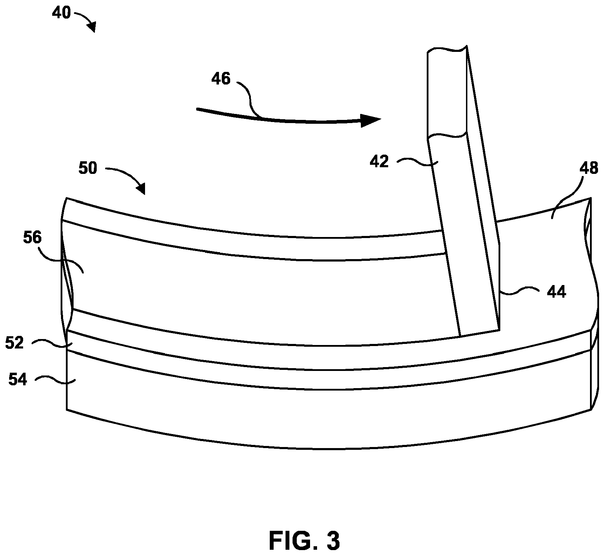

In some examples, having intermediate ceramic layer 18 consist essentially of zirconia and yttria or hafnia and yttria may improve the thermal cycling resistance (e.g., a long thermal cycling life), and/or adhesion of intermediate ceramic layer 18 to bond coat 14 or an optional scale layer (see FIG. 3). For example, intermediate ceramic layer 18 consisting essentially of zirconia and yttria or hafnia and yttria may reduce the coefficient of thermal expansion of intermediate ceramic layer 18 such that it is more comparable to that bond coat 14.

In some examples, rather than including zirconia or hafnia and yttria, intermediate ceramic layer 18 may include or consist essentially of zirconia or hafnia and a mixture of rare earth oxides. For example, intermediate ceramic layer 18 may include a base oxide including zirconia and/or hafnia; a first rare earth oxide including ytterbia; a second rare earth oxide including samaria; and a third rare earth oxide including at least one of lutetia, scandia, ceria, neodymia, europia, or gadolinia. In some examples, the third rare earth oxide may include gadolinia such that the intermediate ceramic layer 18 may include zirconia, ytterbia, samaria, and gadolinia on bond coat 16. Intermediate ceramic layer 18 may include predominately (e.g., the main component or a majority) the base oxide zirconia mixed with a minority amounts of ytterbia, samaria, and at least one of lutetia, scandia, ceria, neodymia, europia, or gadolinia.

In some examples, the composition including zirconia, ytterbia, samaria, and at least one of lutetia, scandia, ceria, neodymia, europia, or gadolinia may provide improved thermal insulation and protection to substrate 14 from high temperatures, e.g., high-temperature of the turbine gas compared to other coating compositions or microstructures. For example, during operation of article 10 in a high temperature environment, heat is transferred through coating system 12 through conduction and radiation. The inclusion of one or more rare earth oxides, such as ytterbia, samaria, and at least one of lutetia, scandia, ceria, neodymia, europia, or gadolinia within a layer of predominately zirconia or hafnia may help decrease the thermal conductivity of intermediate ceramic layer 18, e.g., compared to a layer including zirconia or hafnia and yttria. While not wishing to be bound by any specific theory, the inclusion of ytterbia, samaria, and at least one of lutetia, scandia, ceria, neodymia, europia, or gadolinia in intermediate ceramic layer 18 may reduce thermal conductivity through one or more mechanisms, including phonon scattering due to point defects and grain boundaries in the zirconia crystal lattice due to the rare earth oxides, reduction of sintering, and porosity.

The composition of intermediate ceramic layer 18 is selected to provide a stabilized tetragonal prime (t') phase constitution. To achieve a stabilized tetragonal prime phase constitution, intermediate ceramic layer 18 may include between about 5 wt. % and about 10 wt. % ytterbia, between about 0.5 wt. % and about 2.5 wt. % samaria, and between about 1 wt. % and about 4 wt. % of at least one of lutetia, scandia, ceria, neodymia, europia, or gadolinia, and a balance zirconia or hafnia, and a balance zirconia or hafnia and any impurities present. In some examples, intermediate ceramic layer 18 may consist essentially of between about 5 wt. % and about 10 wt. % ytterbia, between about 0.5 wt. % and about 2.5 wt. % samaria, and between about 1 wt. % and about 4 wt. % of at least one of lutetia, scandia, ceria, neodymia, europia, or gadolinia, and a balance zirconia or hafnia. In some examples, intermediate ceramic layer 18 may include or consist essentially of between about 7.0 wt. % and about 8.0 wt. % ytterbia, between about 1.0 wt. % and about 2.0 wt. % samaria, and between about 2.0 wt. % and about 3.0 wt. % of at least one of lutetia, scandia, ceria, neodymia, europia, or gadolinia, and a balance zirconia or hafnia. In some examples, intermediate ceramic layer 18 may include about 7.5 wt. % ytterbia, about 1.5 wt. % samaria, about 2.5 wt. % of at least one of lutetia, scandia, ceria, neodymia, europia, or gadolinia, and a balance zirconia or hafnia and any impurities present. In any of the above example, the at least one of lutetia, scandia, ceria, neodymia, europia, or gadolinia may include or consist essentially of gadolinia.

In some examples, the inclusion of ytterbia, samaria, and at least one of lutetia, scandia, ceria, neodymia, europia, or gadolinia in intermediate ceramic layer 18 may also provide intermediate ceramic layer 18 with increased resistance to calcia-magnesia-aluminasilicate (CMAS) degradation compared to yttria-stabilized zirconia, reduced thermal conductivity compared to yttria-stabilized zirconia, reduced sintering at a given temperature compared to yttria-stabilized zirconia, or combinations thereof. In some examples, inermediate ceramic coating 18 including yttria or hafnia, ytterbia, samaria, and at least one of lutetia, scandia, ceria, neodymia, europia, or gadolinia may have a sintering temperature greater than 1375 °C (about 2507 °F), or even greater than 1425 °C (about 2597 °F), which may allow use at higher operating temperatures, reduced use of cooling air, or both. This may increase efficiency and reduce specific fuel consumption (SFC) of a gas turbine engine in which coating system 12 is used.

Intermediate ceramic layer 18 defines relatively low porosity. Intermediate ceramic layer 18 defines a porosity of between about 5 vol. % and about 15 vol. %, such as between about 8 vol. % and about 12 vol. %. The size of the pores may be between about 0.5 micrometers and about 5 micrometers, and the pores may be present within or between splats formed by the coating process. The porosity of intermediate ceramic layer 18 may be measured using electron microscopy, optical microscopy, mercury porosimetry, or the like. The porosity in intermediate ceramic layer 18 may be a result of the deposition process used to form intermediate ceramic layer 18. For example, intermediate ceramic layer 18 may be deposited using a thermal spray process, such as air plasma spraying, suspension plasma spraying, high velocity oxy-fuel (HVOF) spraying, or the like. Thermal spray processes may deposit intermediate ceramic layer 18 as a set of softened or melted splats, including internal porosity and pores between adjacent splats. By controlling the deposition process, porosity of intermediate ceramic layer 18 may be controlled to be relatively low, such that intermediate ceramic layer 18 functions as a barrier layer against infiltration of environmental species through intermediate ceramic layer 18 to bond coat 16 and/or substrate 14.

Intermediate ceramic layer 18 is a relatively thin layer. First layer 42 is between about 76.2 micrometers (about 0.003 inches) and about 381 micrometers (about 0.015 inches), such as between about 127 micrometers (about 0.005 inches) and about 203.2 micrometers (about 0.008 inches).

Abradable ceramic layer 20 is directly on intermediate ceramic layer 18. Abradable ceramic layer 20 has higher porosity than intermediate ceramic layer 18, such that abradable ceramic layer 20 abrades upon contact with a rotating component adjacent to coating system 12, such as a gas turbine engine blade.

Abradable ceramic layer 20 includes or consist essentially of zirconia or hafnia and a mixture of rare earth oxides. Abradable ceramic layer 20 includea a base oxide including zirconia and/or hafnia; a first rare earth oxide including ytterbia; a second rare earth oxide including samaria; and a third rare earth oxide including at least one of lutetia, scandia, ceria, neodymia, europia, or gadolinia. In some examples, the third rare earth oxide may include or consist essentially of gadolinia such that the abradable ceramic layer 20 includes or consist essentially of zirconia, ytterbia, samaria, and gadolinia on intermediate ceramic layer 18. Abradable ceramic layer 20 may include predominately (e.g., the main component or a majority) zirconia or hafnia mixed with a minority amounts of ytterbia, samaria, and at least one of lutetia, scandia, ceria, neodymia, europia, or gadolinia.

In some examples, the composition including zirconia or hafnia, ytterbia, samaria, and at least one of lutetia, scandia, ceria, neodymia, europia, or gadolinia may provide improved thermal insulation and protection to substrate 14 from high temperatures, e.g., high-temperature of the turbine gas compared to other coating compositions or microstructures, as described above with reference to intermediate ceramic layer 18. Additionally, the higher porosity of abradable ceramic layer 20 may reduce thermal conductivity of abradable ceramic layer 20 relative to intermediate ceramic layer 18.

The composition of abradable ceramic layer 20 is selected to provide a stabilized tetragonal prime (t') phase constitution. To achieve a stabilized tetragonal prime phase constitution, abradable ceramic layer 20 includes between about 5 wt. % and about 10 wt. % ytterbia, between about 0.5 wt. % and about 2.5 wt. % samaria, and between about 1 wt. % and about 4 wt. % of at least one of lutetia, scandia, ceria, neodymia, europia, or gadolinia, and a balance zirconia or hafnia, and a balance zirconia or hafnia and any impurities present. In some examples, abradable ceramic layer 20 consists essentially of between about 5 wt. % and about 10 wt. % ytterbia, between about 0.5 wt. % and about 2.5 wt. % samaria, and between about 1 wt. % and about 4 wt. % of at least one of lutetia, scandia, ceria, neodymia, europia, or gadolinia, and a balance zirconia or hafnia. In some examples, abradable ceramic layer 20 may include or consist essentially of between about 7.0 wt. % and about 8.0 wt. % ytterbia, between about 1.0 wt. % and about 2.0 wt. % samaria, and between about 2.0 wt. % and about 3.0 wt. % of at least one of lutetia, scandia, ceria, neodymia, europia, or gadolinia, and a balance zirconia or hafnia. In some examples, abradable ceramic layer 20 may include about 7.5 wt. % ytterbia, about 1.5 wt. % samaria, about 2.5 wt. % of at least one of lutetia, scandia, ceria, neodymia, europia, or gadolinia, and a balance zirconia or hafnia and any impurities present. In any of the above example, the at least one of lutetia, scandia, ceria, neodymia, europia, or gadolinia may include or consist essentially of gadolinia. In some examples, abradable ceramic layer 20 may include a similar or substantially the same composition (including oxides, compositional amounts, or both) as intermediate ceramic layer 18.

In some examples, the inclusion of ytterbia, samaria, and at least one of lutetia, scandia, ceria, neodymia, europia, or gadolinia in abradable ceramic layer 20 may also provide abradable ceramic layer 20 with increased resistance to calcia-magnesia-aluminasilicate (CMAS) degradation compared to yttria-stabilized zirconia, reduced thermal conductivity compared to yttria-stabilized zirconia, reduced sintering at a given temperature compared to yttria-stabilized zirconia, or combinations thereof. In some examples, abradable ceramic layer 20 including yttria or hafnia, ytterbia, samaria, and at least one of lutetia, scandia, ceria, neodymia, europia, or gadolinia may have lower bulk hardness than yttria-stabilized zirconia, which may facilitate abradability of abradable ceramic layer 20. In some examples, abradable ceramic layer 20 including yttria or hafnia, ytterbia, samaria, and at least one of lutetia, scandia, ceria, neodymia, europia, or gadolinia may have a sintering temperature greater than 1375 °C (about 2507 °F), or even greater than 1425 °C (about 2597 °F), which may allow use at higher operating temperatures, reduced use of cooling air, or both. This may increase efficiency and reduce specific fuel consumption (SFC) of a gas turbine engine in which coating system 12 is used.

Abradable ceramic layer 20 defines relatively higher porosity that intermediate ceramic layer 18. Abradable ceramic layer 20 defines a porosity of between about 15 vol. % and about 35 vol. %, or between about 20 vol. % and about 30 vol. %. The porosity of abradable ceramic layer 20 may be measured using electron microscopy, optical microscopy, mercury porosimetry, or the like. The porosity in abradable ceramic layer 20 may be a result of the deposition process used to form abradable ceramic layer 20. For example, abradable ceramic layer 20 may be deposited using a thermal spray process, such as air plasma spraying, suspension plasma spraying, high velocity oxy-fuel (HVOF) spraying, or the like. Thermal spray processes may deposit intermediate ceramic layer 18 as a set of softened or melted splats, including internal porosity and pores between adjacent splats. By controlling the deposition process, porosity of abradable ceramic layer 20 may be controlled to be relatively higher, such that abradable ceramic layer 20 abrades in response to contact by a rotating component.

In some examples, abradable ceramic layer 20 may be deposited in combination with a fugitive material. The fugitive material may include any material that may be removed, e.g., by heating, after deposition of abradable ceramic layer 20. In some examples, the fugitive material may include graphite, hexagonal boron nitride, or a polymer such as a polyester. The fugitive material then is melted or burned off in a post-deposition heat treatment, or during operation of the gas turbine engine, to form pores in abradable ceramic layer 20. In some examples, the porosity of abradable ceramic layer 20 can additionally or alternatively be created and/or controlled by plasma spraying the coating material using a cospray process technique in which the coating material and coating material additive are fed into the plasma stream with two radial powder feed injection ports.

Abradable ceramic layer 20 defines a thickness between about 254 micrometers (about 0.01 inches) and about 2032 micrometers (about 0.08 inches). For example, abradable ceramic layer 20 may define a thickness between about 508 micrometers (about 0.02 inches) and about 1016 micrometers (about 0.04 inches).

In some examples, a coating system may include an oxide scale layer between the bond coat and the intermediate ceramic layer. FIG. 2 is a conceptual diagram illustrating an example article 30 that includes substrate 14 and a coating system 32 on substrate 14. Like article 10 of FIG. 1, coating system 32 includes a bond coat 16 directly on substrate 14, an intermediate ceramic layer 18 on bond coat 16, and an abradable ceramic layer 20 directly on intermediate ceramic layer 18. Unlike article 10, coating system 32 additionally includes an oxide scale 34 directly on bond coat 16. Intermediate ceramic layer 18 is directly on oxide scale 34.

Oxide scale 34 may be formed by thermal oxidation of bond coat 16, and facilitates adhesion between bond coat 14 and intermediate ceramic layer 18. Oxide scale 34 may include one or more oxides formed by oxidation of bond coat 14. For example, oxide scale 34 may include alumina, chromia, silica, or combinations thereof. In some examples, oxide scale 34 include a majority alumina.

Articles 10 and 30 of FIGS. 1 and are used as a seal adjacent to a rotating component of a gas turbine engine. FIG. 3 is a conceptual diagram illustrating a system 40 that includes an article 50 that includes a coating system 52 including an intermediate ceramic layer and an abradable ceramic layer, each including a stabilized tetragonal prime phase constitution, and a turbine blade 42. Article 50 may be similar to or substantially the same as article 10 of FIG. 1 or article 30 of FIG. 2. Turbine blade 42 includes a blade tip 94. Blade tip 94 may include an abrasive coating or may omit an abrasive coating. In some examples, the abrasive coating may facilitate abrasion of the abradable ceramic layer of coating system 52 and may protect blade tip 44 from damage from the abradable ceramic layer. The abrasive coating may include, for example, cubic boron nitride or another coating with high fracture toughness and acceptable high temperature performance. However, a blade tip 44 including an abrasive coating may be more complex and thus more expensive than a blade tip 44 that does not include an abrasive coating. Accordingly, in some embodiments, blade tip 44 may omit an abrasive coating.

The contact between blade tip 44 and a portion of the abradable ceramic layer coating system 52 of may be intentional for at least some of the temperatures experienced by article 50 and turbine blade 42. For example, turbine blade 42 may experience thermal expansion when heated to its operating temperature from the temperature when the gas turbine engine is not in use. At the same time, article 50 may also undergo thermal expansion when heated to the operating temperature. The thermal expansion experienced by turbine blade 42 and article 50 may result in a change in distance between substrate 54 of article 50 and blade tip 44. In some embodiments, the thickness of the abradable ceramic layer of coating system 52 may be selected such that blade tip 44 approximately contacts surface 48 of the abradable ceramic layer at a low temperature, such as a minimum operating temperature or a temperature of the surrounding environment when the gas turbine engine is not operating. The thickness of the abradable ceramic layer may also be selected such that when turbine blade 42 and article 50 are at an operating temperature, blade tip 44 contacts and abrades at least a portion of the abradable ceramic layer but does not contact or abrade underlying layers of coating system 52 and/or substrate 54.

As FIG. 3 illustrates, as blade 42 rotates in a direction indicated by arrow 46, blade tip 44 may contact a portion of the abradable ceramic layer of coating system 52 and abrade a portion of the abradable ceramic layer to form a groove 56 in the abradable ceramic layer. The depth of groove 56 corresponds to the extent to which blade 52 extends into the abradable ceramic layer. The depth of groove 56 may not be constant, as variations in fit between article 50 and turbine blade 42 may exist along the circumference of blade track 100.

Of course, in actual gas turbine engines, more than one blade is used. The turbine blades may follow substantially the same path along article 50 as the blades rotate during operation. However, the turbine blades may vary slightly in length or alignment, and thus may abrade different portions of the abradable ceramic layer. Accordingly, groove 56 may be essentially a superposition of the grooves formed by each turbine blade 42. Because of this, the seal between a turbine blade 42 and coating system 52 may not be perfect but may be improved compared to a seal between a turbine blade 42 and article 50 that does not include coating system 52 including the abradable ceramic layer.

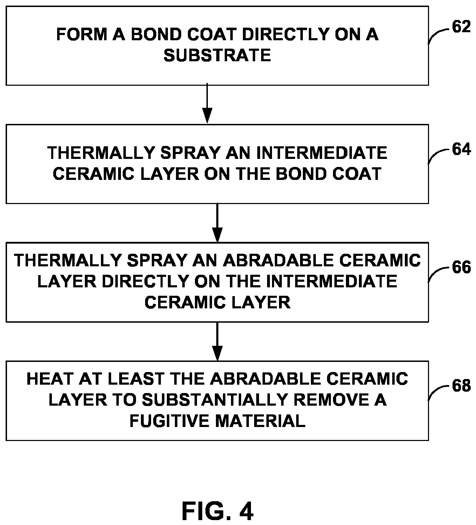

FIG. 4 is a flow diagram illustrating an example technique for forming an example article that includes an intermediate ceramic layer and an abradable ceramic layer, each including a stabilized tetragonal prime phase constitution. The technique of FIG. 4 is described with respect to article 10 of FIG. 1 for ease of description only. However, the techniques of FIG. 4 may be used to form other articles (e.g., article 30 of FIG. 2 or article 50 of FIG. 3).

The technique of FIG. 4 includes forming bond coat 16 directly on substrate 14 (62). Bond coat 16 may be formed on substrate 14 using any suitable technique including, for example, electrodeposition, electroplating, chemical vapor deposition (CVD), a physical vapor deposition (PVD) process, or combinations thereof. For example, a layer of platinum or another platinum-group metal may be electroplated on substrate 14, then other elements or compounds of bond coat 16 may be deposited on the layer of platinum-group metal using a PVD process, such as sputtering, pack cementation, or the like. In some examples, forming bond coat 16 may include a heat treatment step to diffuse elements or compounds between substrate 14 and bond coat 16.

In some examples, although not shown in FIG. 4, the technique may optionally include forming scale layer 34 (FIG. 2) on bond coat 16. For example, bond coat 16 may be exposed to a heat treatment step in an oxidizing environment (e.g., oxygen or air) to cause one or more elements in bond coat 16 to oxidize and form scale layer 34. For example, aluminum in bond coat 16 may react to form alumina, which may form part or all of scale layer 34.

The technique of FIG. 4 also includes thermally spraying intermediate ceramic layer 18 on bond coat 16 (64). In some examples, intermediate ceramic layer 18 may be thermally sprayed directly on bond coat 16 or may be thermally sprayed directly on scale layer 34. The thermal spray process may include any suitable thermal spray process, including, for example, air plasma spraying, suspension plasma spraying, high velocity oxy-fuel (HVOF) spraying, or the like.

The technique of FIG. 4 further includes thermally spraying abradable ceramic layer 20 directly on intermediate ceramic layer 18 (66). The thermal spray process may include any suitable thermal spray process, including, for example, air plasma spraying, suspension plasma spraying, high velocity oxy-fuel (HVOF) spraying, or the like.

Abradable ceramic layer 20 may be sprayed from a coating material that includes the materials in abradable ceramic layer 20 and a fugitive material. The fugitive material may include any material that may be removed, e.g., by heating, after deposition of abradable ceramic layer 20. In some examples, the fugitive material may include graphite, hexagonal boron nitride, or a polymer such as a polyester.

The technique of FIG. 4 optionally includes heating at least abradable ceramic layer 20 to substantially remove the fugitive material (68). The fugitive material may be melted or burned off in a post-deposition heat treatment, or during operation of the gas turbine engine, to form pores in abradable ceramic layer 20.

### EXAMPLES

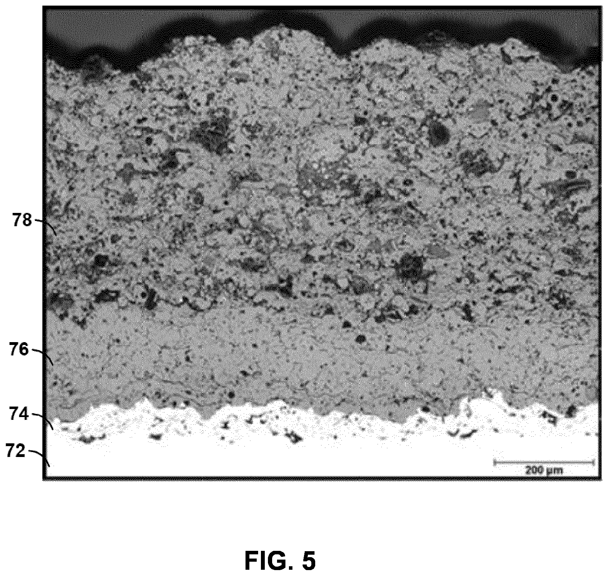

A substrate including between about 66.16 and about 68.24 wt. % Ni, between about 9.30 and about 9.70 wt. % W, between about 9 and about 9.50 wt. % Co, between 8 and about 8.5 wt. % Cr, between about 5.4 and about 5.7 wt. % Al, about 0.25 wt. % Si, about 0.1 wt. % Mn, and between about 0.06 and 0.09 C, available under the trade designation Mar-M 247^{™} from Cannon-Muskegon Corp, Muskegon, Michigan was coated with an MCrAlY bond coat formed from a powder including between 19.0 and 26.0 wt. % Co, between 14.0 and 21.0 wt. % Cr, between 11.0 and 14.0 wt. % Al, between 0.2 and 0.8 wt % Y, between 0.1 and 0.5 wt. % Hf, between 0.1 and 0.7 wt. % Si, and a balance Ni available under the trade designation Amdry^{™} 386-4 from Oerlikon Metco, Pfaffikon, Switzerland. An yttria-stabilized zirconia intermediate coating including 7 wt. % yttria was deposited on the MCrAlY bond coat, and an abradable coating was deposited on the intermediate coating from a powder including about 7.75 wt. % Yb₂O₃, about 2.78 wt. % Gd₂O₃, about 1.9 wt. % Sm₂O₃, about 1.58 wt. % Hf, about 0.01 wt. % Fe₂O₃, less than 0.01 wt. % MgO, about 0.48 wt. % Na₂O, about 0.01 wt. % SiO2, about .5 wt. % other oxides, about 3.97 wt. % organic solids, and about 3.65 wt. % polyester, and a balance ZrO₂. The yttria-stabilized zirconia intermediate coating and the abradable coating were deposited using air plasma spraying. FIG. 5 is a photomicrograph of the applied coating system, including substrate 72, MCrAlY bond coating 74, intermediate coating 76, and abradable coating 78.

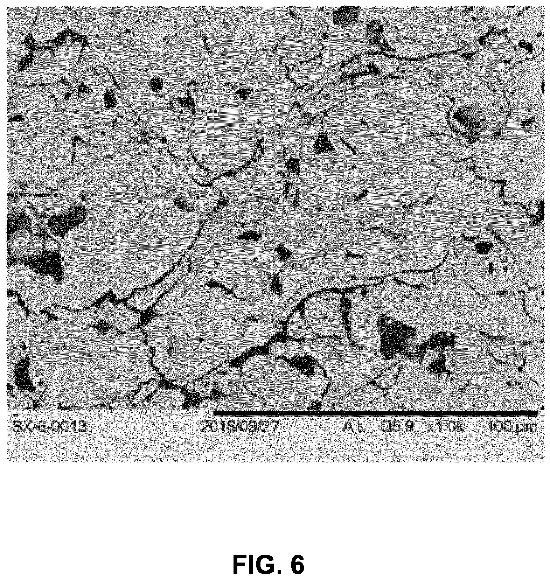

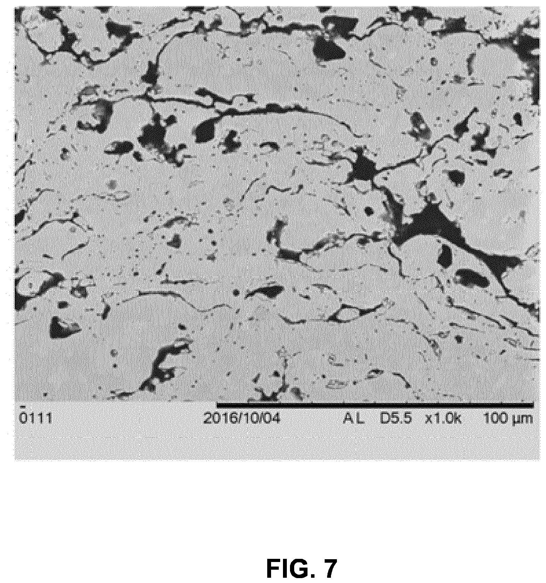

Sintering was investigated by exposing a first sample to a temperature of 1371°C for 100 hours and a second sample to a temperature of 1427°C for 100 hours. FIG. 6 is a metallographic cross section of the first sample after exposure to a temperature of 1371°C for 100 hours. FIG. 6 shows no evidence of sintering. FIG. 7 is a metallographic cross section of the second sample after exposure to a temperature of 1427°C for 100 hours. FIG. 7 shows evidence of the beginning of sintering.

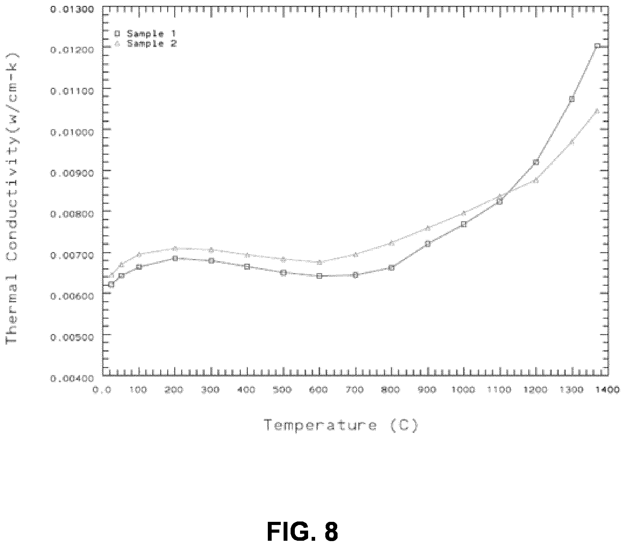

FIG. 8 is plot of calculated thermal conductivity versus temperature for two sample coatings. Thermal diffusivity was determined using the laser flash diffusivity method set forth in ASTM E1461. Specific heat was measured using a Perking-Elmer Differential Scanning Calorimeter according to ASTM E1269. Thermal conductivity was then determined according to the equation λ = α Cₚ d, where λ is thermal conductivity, α is thermal diffusivity, Cₚ is specific heat, and d is density of the coating.

Various examples have been described. These and other examples are within the scope of the following claims.

## Claims

1. A gas turbine engine comprising:
an abradable runner (10, 30, 50) comprising:
a substrate (14) comprising a metal or alloy;
a bond coat (16) directly on the substrate (14), wherein the bond coat (16) comprises an alloy including aluminum;
an intermediate ceramic layer (18) on the bond coat (16), wherein the intermediate ceramic layer (18) comprises a stabilized tetragonal prime phase constitution; and
an abradable ceramic layer (20) directly on the intermediate ceramic layer (18); and
a rotating component (42), wherein the abradable runner (10, 30, 50) and the rotating component (42) are positioned so that the rotating component (42) contacts a portion of the abradable ceramic layer (20) during rotation of the rotating component (42), and wherein the abradable ceramic layer (20) is configured to be abraded by the contact by the rotating component (42);
**characterized in that**:
the intermediate ceramic layer (18) defines a first porosity between 5 volume percent and 15 volume percent, wherein the intermediate ceramic layer (18) defines a thickness between 76.2 micrometers and 381 micrometers, and wherein the intermediate ceramic layer (18) comprises:
between 4 wt. % and 20 wt. % yttria and a balance zirconia or hafnia; or
a first mixture comprising between 5 wt. % and 10 wt. % ytterbia, between 0.5 wt. % and 2.5 wt. % samaria, and between 1 wt. % and 4 wt. % of at least one of lutetia, scandia, ceria, neodymia, europia, or gadolinia, and a balance zirconia or hafnia; and
the abradable ceramic layer (20) comprises zirconia or hafnia stabilized in the tetragonal prime phase by a second mixture comprising between 5 wt% and 10 wt. % ytterbia, between 0.5 wt% and 2.5 wt. % samaria, and between wt. % and 4 wt. % of at least one of lutetia, scandia, ceria, neodymia, europia, or gadolinia, and a balance zirconia or hafnia, wherein the abradable ceramic layer (20) defines a second porosity between 15 volume percent and 35 volume percent, wherein the abradable ceramic layer (20) defines a thickness between 254 micrometers and 2032 micrometers, and wherein the second porosity is higher than the first porosity.

2. The gas turbine engine of claim 1, wherein the intermediate ceramic layer (18) comprises more ytterbia than a combination of all other rare earth oxides present in the intermediate ceramic layer (18).

3. The gas turbine engine of claim 1 or 2, wherein the intermediate ceramic layer (18) comprises zirconia stabilized in the tetragonal prime phase by 7.5 wt% ytterbia, 1.5 wt% samaria and 2.5 wt. % gadolinia, and a balance zirconia or hafnia.

4. The gas turbine engine of any one of claims 1 to 3, wherein the abradable ceramic layer (20) comprises more ytterbia than a combination of all other rare earth oxides present in the intermediate ceramic layer (18).

5. The gas turbine engine of any one of claims 1 to 4, wherein the intermediate ceramic layer (18) comprises zirconia stabilized in the tetragonal prime phase by 7.5 wt% ytterbia, 1.5 wt% samaria and 2.5 wt. % gadolinia, and a balance zirconia or hafnia.

6. The gas turbine engine of any one of claims 1 to 5, wherein the intermediate ceramic layer (18) defines a porosity of between 5 vol% and 15 vol. %, and wherein the intermediate ceramic layer (18) defines an average pore size of between about 0.5 micrometers and about 5 micrometers.

7. The gas turbine engine of any one of claims 1 to 6, wherein the abradable ceramic layer (20) defines a porosity of between 10 vol % and 40 vol. %.

8. The gas turbine engine of any one of claims 1 to 7, wherein the bond coat (16) comprises at least one of MCrAlY, wherein M is selected from Co, Fe, Ni, or combinations thereof; β-NiAl; or γ-Ni + γ'-NiAl, wherein the abradable runner (30, 50) further comprises an alumina scale layer (34) between the bond coat (16) and the intermediate ceramic layer (18).

9. The gas turbine engine of claim 1, wherein the rotating component (42) comprises a gas turbine engine blade comprising a blade tip (44).

10. The gas turbine engine system of claim 9, further comprising an abrasive coating on the blade tip (44).

11. A method for making the gas turbine engine of any one of claims 1 to 10, the method comprising:
forming a bond coat (16) directly on a substrate (14), wherein the bond coat (16) comprises an alloy including aluminum, and wherein the substrate (14) comprises a metal or alloy;
thermally spraying an intermediate ceramic layer (18) on the bond coat (16), wherein the intermediate ceramic layer (18) comprises a stabilized tetragonal prime phase constitution, and wherein the intermediate ceramic layer (18) comprises:
between 4 wt% and 20 wt. % yttria and a balance zirconia or hafnia; or
a first mixture comprising between 5 wt% and 10 wt. % ytterbia, between 0.5 wt% and 2.5 wt. % samaria, and between 1 wt% and wt. % of at least one of lutetia, scandia, ceria, neodymia, europia, or gadolinia, and a balance zirconia or hafnia; and
thermally spraying an abradable ceramic layer (20) directly on the intermediate ceramic layer (18), wherein the abradable ceramic layer (20) comprises zirconia or hafnia stabilized in the tetragonal prime phase by a second mixture comprising between 5 wt% and 10 wt% ytterbia, between 0.5 wt% and 2.5 wt% samaria, between 1 wt% and 4 wt. % of at least one of lutetia, scandia, ceria, neodymia, europia, or gadolinia, between 2 wt% and 10 wt. % fugitive material, and a balance zirconia or hafnia; and
positioning a gas turbine engine blade (42) comprising a blade tip (44) so that the blade tip (44) contacts a portion of the abradable ceramic layer (20) during rotation of the gas turbine engine blade (42), and wherein the abradable ceramic layer (20) is configured to be abraded by the contact by the blade tip (44).

## Patentansprüche

1. Gasturbinentriebwerk, umfassend:
einen abreibbaren Läufer (10, 30, 50), umfasst:
ein Substrat (14), das ein Metall oder eine Legierung umfasst;
eine Bindungsschicht (16) direkt auf dem Substrat (14), wobei die Bindungsschicht (16) eine Aluminium enthaltende Legierung umfasst;
eine Keramik-Zwischenschicht (18) auf der Bindungsschicht (16), wobei die Keramik-Zwischenschicht (18) eine stabilisierte tetragonale Primärphasenstruktur umfasst; und
eine abreibbare Keramikschicht (20) direkt auf der Keramik-Zwischenschicht (18); und
eine rotierende Komponente (42), wobei der abreibbare Läufer (10, 30, 50) und die rotierende Komponente (42) so positioniert sind, dass die rotierende Komponente (42) einen Abschnitt der abreibbaren Keramikschicht (20) während der Rotation der rotierenden Komponente (42) berührt, und wobei die abreibbare Keramikschicht (20) dazu konfiguriert ist, durch die Berührung mit der rotierenden Komponente (42) abgerieben zu werden;
**dadurch gekennzeichnet, dass**:
die Keramik-Zwischenschicht (18) eine erste Porosität zwischen 5 Volumenprozent und 15 Volumenprozent definiert, wobei die Keramik-Zwischenschicht (18) eine Dicke zwischen 76,2 Mikrometer und 381 Mikrometer definiert, und wobei die Keramik-Zwischenschicht (18) umfasst:
zwischen 4 Gew.-% und 20 Gew.-% Yttriumoxid und als Rest Zirkondioxid oder Hafniumoxid; oder
eine erste Mischung, die zwischen 5 Gew.-% und 10 Gew.-% Ytterbiumoxid, zwischen 0,5 Gew.-% und 2,5 Gew.-% Samariumoxid und zwischen 1 Gew.-% und 4 Gew.-% von mindestens einem von Lutetium, Scandium, Zeroxid, Neodymoxid, Europiumoxid oder Gadoliniumoxid und als Rest Zirkondioxid oder Hafniumoxid umfasst; und
die abreibbare Keramikschicht (20) Zirkondioxid oder Hafniumoxid umfasst, das in der tetragonalen Primärphase durch eine zweite Mischung stabilisiert ist, die zwischen 5 Gew.-% und 10 Gew.-% Ytterbiumoxid, zwischen 0,5 Gew.-% und 2,5 Gew.-% Samariumoxid und zwischen 1 Gew.-% und 4 Gew.-% von mindestens einem von Lutetium, Scandium, Zeroxid, Neodymoxid, Europiumoxid oder Gadoliniumoxid und als Rest Zirkondioxid oder Hafniumoxid umfasst, wobei die abreibbare Keramikschicht (20) eine zweite Porosität zwischen 15 Volumenprozent und 35 Volumenprozent definiert, wobei die abreibbare Keramikschicht (20) eine Dicke zwischen 254 Mikrometer und 2032 Mikrometer definiert und wobei die zweite Porosität höher als die erste Porosität ist.

2. Gasturbinentriebwerk nach Anspruch 1, wobei die Keramik-Zwischenschicht (18) mehr Ytterbiumoxid als eine Kombination aller anderen Seltenerdoxide umfasst, die in der Keramik-Zwischenschicht (18) vorhanden sind.

3. Gasturbinentriebwerk nach Anspruch 1 oder 2, wobei die Keramik-Zwischenschicht (18) Zirkondioxid umfasst, das in der tetragonalen Primärphase durch 7,5 Gew.-% Ytterbiumoxid, 1,5 Gew.-% Samariumoxid und 2,5 Gew.-% Gadoliniumoxid und als Rest Zirkondioxid oder Hafniumoxid stabilisiert ist.

4. Gasturbinentriebwerk nach einem der Ansprüche 1 bis 3, wobei die abreibbare Keramikschicht (20) mehr Ytterbiumoxid als eine Kombination aller anderen Seltenerdoxide umfasst, die in der Keramik-Zwischenschicht (18) vorhanden sind.

5. Gasturbinentriebwerk nach einem der Ansprüche 1 bis 4, wobei die Keramik-Zwischenschicht (18) Zirkondioxid umfasst, das in der tetragonalen Primärphase durch 7,5 Gew.- % Ytterbiumoxid, 1,5 Gew.-% Samariumoxid und 2,5 Gew.-% Gadoliniumoxid und als Rest Zirkondioxid oder Hafniumoxid stabilisiert ist.

6. Gasturbinentriebwerk nach einem der Ansprüche 1 bis 5, wobei die Keramik-Zwischenschicht (18) eine Porosität zwischen 5 Vol.-% und 15 Vol.-% definiert, und wobei die die Keramik-Zwischenschicht (18) eine durchschnittliche Porengröße zwischen etwa 0,5 Mikrometer und etwa 5 Mikrometer definiert.

7. Gasturbinentreibwerk nach einem der Ansprüche 1 bis 6, wobei die abreibbare Keramikschicht (20) eine Porosität zwischen 10 Vol.-% und 40 Vol.-% definiert.

8. Gasturbinentriebwerk nach einem der Ansprüche 1 bis 7, wobei die Bindungsschicht (16) mindestens eines von MCrAlY, wobei M ausgewählt ist aus Co, Fe, Ni oder Kombinationen davon; β-NiAl; oder γ-Ni + γ'-NiAl umfasst, wobei der abreibbare Läufer (30, 50) ferner eine Aluminiumoxid-Zunderschicht (34) zwischen der Bindungsschicht (16) und der Keramik-Zwischenschicht (18) umfasst.

9. Gasturbinentriebwerk nach Anspruch 1, wobei die rotierende Komponente (42) eine Gasturbinentriebwerksschaufel umfasst, die eine Schaufelspitze (44) umfasst.

10. Gasturbinentriebwerk nach Anspruch 9, ferner umfassend eine abrasive Beschichtung an der Schaufelspitze (44).

11. Verfahren zum Herstellen des Gasturbinentriebwerks nach einem der Ansprüche 1 bis 10, wobei das Verfahren umfasst:
Bilden einer Bindungschicht (16) direkt auf einem Substrat (14), wobei die Bindungsschicht (16) eine Aluminium enthaltende Legierung umfasst und wobei das Substrat (14) ein Metall oder eine Legierung umfasst;
thermisches Aufsprühen einer Keramik-Zwischenschicht (18) auf die Bindungsschicht (16), wobei die Keramik-Zwischenschicht (18) eine stabilisierte tetragonale Primärphasenstruktur umfasst und wobei die Keramik-Zwischenschicht (18) umfasst:
zwischen 4 Gew.-% und 20 Gew.-% Yttriumoxid und als Rest Zirkondioxid oder Hafniumoxid; oder
eine erste Mischung, die zwischen 5 Gew.-% und 10 Gew.-% Ytterbiumoxid, zwischen 0,5 Gew.-% und 2,5 Gew.-% Samariumoxid, und zwischen 1 Gew.-% und 4 Gew.-% von mindestens einem von Lutetium, Scandium, Zeroxid, Neodymoxid, Europiumoxid oder Gadoliniumoxid und als Rest Zirkondioxid oder Hafniumoxid umfasst; und
thermisches Aufsprühen einer abreibbaren Keramikschicht (20) direkt auf die Keramik-Zwischenschicht (18), wobei die abreibbare Keramikschicht (20) Zirkondioxid oder Hafniumoxid umfasst, das in der tetragonalen Primärphase durch eine zweite Mischung stabilisiert ist, die zwischen 5 Gew.-% und 10 Gew.-% Ytterbiumoxid, zwischen 0,5 Gew.-% und 2,5 Gew.-% Samariumoxid, zwischen 1 Gew.-% und 4 Gew.-% von mindestens einem von Lutetium, Scandium, Zeroxid, Neodymoxid, Europiumoxid oder Gadoliniumoxid, zwischen 2 Gew.-% und 10 Gew.-% flüchtiges Material und als Rest Zirkondioxid oder Hafniumoxid umfasst; und
Positionieren einer Gasturbinentriebwerksschaufel (42), die eine Schaufelspitze (44) umfasst, so dass die Schaufelspitze (44) einen Abschnitt der abreibbaren Keramikschicht (20) während der Rotation der Gasturbinentriebwerks schaufei (42) berührt, und wobei die abreibbare Keramikschicht (20) konfiguriert ist, um durch den Kontakt mit der Schaufelspitze (44) abgerieben zu werden.

## Revendications

1. Moteur à turbine à gaz comprenant :
une roue abradable (10, 30, 50) comprenant :
un substrat (14) comprenant un métal ou un alliage ;
un revêtement de liaison (16) directement sur le substrat (14), dans lequel le revêtement de liaison (16) comprend un alliage comprenant de l'aluminium ;
une couche céramique intermédiaire (18) sur le revêtement de liaison (16), dans lequel la couche céramique intermédiaire (18) comprend une constitution de phase primaire tétragonale stabilisée ; et
une couche céramique abradable (20) directement sur la couche céramique intermédiaire (18) ; et un composant rotatif (42), dans lequel la roue abradable (10, 30, 50) et le composant rotatif (42) sont positionnés de sorte que le composant rotatif (42) entre en contact avec une partie de la couche céramique abradable (20) pendant la rotation du composant rotatif (42), et dans lequel la couche céramique abradable (20) est configurée pour être abrasée par le contact du composant rotatif (42) ;
**caractérisé en ce que** :
la couche céramique intermédiaire (18) définit une première porosité entre 5 % en volume et 15 % en volume, dans lequel la couche céramique intermédiaire (18) définit une épaisseur entre 76,2 micromètres et 381 micromètres, et dans lequel la couche céramique intermédiaire (18) comprend
entre 4 % en poids et 20 % en poids d'oxyde d'yttrium et le reste de zircone ou d'oxyde d'hafnium ; ou
un premier mélange comprenant entre 5 % en poids et 10 % en poids d'oxyde d'ytterbium, entre 0,5 % en poids et 2,5 % en poids d'oxyde de samarium, et entre 1 % en poids et 4 % en poids d'au moins l'un parmi l'oxyde de lutétium, l'oxyde de scandium, l'oxyde de cérium, l'oxyde de néodyme, l'oxyde d'europium ou l'oxyde de gadolinium, et le reste de zircone ou d'oxyde d'hafnium ; et
la couche de céramique abradable (20) comprend de la zircone ou de l'oxyde d'hafnium stabilisé dans la phase primaire tétragonale par un second mélange comprenant entre 5 % en poids et 10 % en poids d'oxyde d'ytterbium, entre 0,5 % en poids et 2,5 % en poids d'oxyde de samarium, et entre 1 % en poids et 4 % en poids d'au moins l'un parmi l'oxyde de lutétium, l'oxyde de scandium, l'oxyde de cérium, l'oxyde de néodyme, l'oxyde d'europium ou l'oxyde de gadolinium, et le reste de zircone ou d'oxyde d'hafnium, dans lequel la couche céramique abradable (20) définit une seconde porosité entre 15 % en volume et 35 % en volume, dans lequel la couche céramique abradable (20) définit une épaisseur entre 254 micromètres et 2032 micromètres, et dans lequel la seconde porosité est supérieure à la première porosité.

2. Moteur à turbine à gaz selon la revendication 1, dans lequel la couche céramique intermédiaire (18) comprend plus d'oxyde d'ytterbium qu'une combinaison de tous les autres oxydes de terres rares présents dans la couche céramique intermédiaire (18).

3. Moteur à turbine à gaz selon la revendication 1 ou 2, dans lequel la couche céramique intermédiaire (18) comprend de la zircone stabilisée dans la phase primaire tétragonale par 7,5 % en poids d'oxyde d'ytterbium, 1,5 % en poids d'oxyde de samarium et 2,5 % en poids d'oxyde de gadolinium, et le reste de zircone ou d'oxyde d'hafnium.

4. Moteur à turbine à gaz selon l'une quelconque des revendications 1 à 3, dans lequel la couche céramique abradable (20) comprend plus d'oxyde d'ytterbium qu'une combinaison de tous les autres oxydes de terres rares présents dans la couche céramique intermédiaire (18).

5. Moteur à turbine à gaz selon l'une quelconque des revendications 1 à 4, dans lequel la couche céramique intermédiaire (18) comprend de la zircone stabilisée dans la phase primaire tétragonale par 7,5 % en poids d'oxyde d'ytterbium, 1,5 % en poids d'oxyde de samarium et 2,5 % en poids d'oxyde de gadolinium, et le reste de zircone ou d'oxyde d'hafnium.

6. Moteur à turbine à gaz selon l'une quelconque des revendications 1 à 5, dans lequel la couche céramique intermédiaire (18) définit une porosité comprise entre 5 % en volume et 15 % en volume, et dans lequel la couche céramique intermédiaire (18) définit une taille moyenne de pores comprise entre environ 0,5 micromètre et environ 5 micromètres.

7. Moteur à turbine à gaz selon l'une quelconque des revendications 1 à 6, dans lequel la couche céramique abradable (20) définit une porosité comprise entre 10 % en volume et 40 % en volume.

8. Moteur à turbine à gaz selon l'une quelconque des revendications 1 à 7, dans lequel le revêtement de liaison (16) comprend au moins l'un de MCrAlY, dans lequel M est choisi parmi Co, Fe, Ni ou leurs combinaisons ; β-NiAl; ou γ-Ni + y'-NiAl, dans lequel la roue abradable (30, 50) comprend en outre une couche de tartre d'alumine (34) entre le revêtement de liaison (16) et la couche céramique intermédiaire (18).

9. Moteur à turbine à gaz selon la revendication 1, dans lequel le composant rotatif (42) comprend une aube de moteur à turbine à gaz comprenant une pointe d'aube (44).

10. Système de moteur à turbine à gaz selon la revendication 9, comprenant en outre un revêtement abrasif sur la pointe d'aube (44).

11. Procédé de fabrication du moteur à turbine à gaz selon l'une quelconque des revendications 1 à 10, le procédé comprenant :
la formation d'un revêtement de liaison (16) directement sur un substrat (14), dans lequel le revêtement de liaison (16) comprend un alliage comprenant de l'aluminium, et dans lequel le substrat (14) comprend un métal ou un alliage ;
la pulvérisation thermique d'une couche céramique intermédiaire (18) sur le revêtement de liaison (16), dans lequel la couche céramique intermédiaire (18) comprend une constitution de phase primaire tétragonale stabilisée, et dans lequel la couche céramique intermédiaire (18) comprend :
entre 4% en poids et 20 % en poids d'oxyde d'yttrium et le reste de zircone ou d'oxyde d'hafnium ; ou
un premier mélange comprenant entre 5 % en poids et 10 % en poids d'oxyde d'ytterbium,
entre 0,5 % en poids et 2,5 % en poids d'oxyde de samarium, et entre 1 % en poids et 4 % en poids d'au moins l'un parmi l'oxyde de lutétium, l'oxyde de scandium, l'oxyde de cérium, l'oxyde de néodyme, l'oxyde d'europium ou l'oxyde de gadolinium, et le reste de zircone ou d'oxyde d'hafnium ; et
la pulvérisation thermique d'une couche céramique abradable (20) directement sur la couche céramique intermédiaire (18), dans lequel la couche céramique abradable (20) comprend de la zircone ou de l'oxyde d'hafnium stabilisé dans la phase primaire tétragonale par un second mélange comprenant entre 5% en poids et 10 % en poids d'oxyde d'ytterbium, entre 0,5 % en poids et 2,5 % en poids d'oxyde de samarium, entre 1 % en poids et 4 poids % d'au moins l'un parmi l'oxyde de lutétium, l'oxyde de scandium, l'oxyde de cérium, l'oxyde de néodyme, l'oxyde d'europium ou l'oxyde de gadolinium, entre 2 % en poids et 10 poids % de matière fugitive, et le reste de zircone ou d'oxyde d'hafnium ; et
le positionnement d'une aube de moteur à turbine à gaz (42) comprenant une pointe d'aube (44) de sorte que la pointe d'aube (44) entre en contact avec une partie de la couche céramique abradable (20) pendant la rotation de l'aube de moteur à turbine à gaz (42), et dans lequel la couche céramique abradable (20) est configurée pour être abrasée par le contact de la pointe d'aube (44).
